# EUROPÄISCHE PATENTANMELDUNG

(11) **EP 1 270 279 A2**
(43) Veröffentlichungstag der Anmeldung: **02.01.2003**
(21) Anmeldenummer: 02012614.0
(22) Anmeldetag: 06.06.2002
(51) Int. Cl.: B60C 25/00, B60S 5/04

(54) **Vorrichtung zum Füllen eines auf einer Felge aufgezogenen schlauchlosen Reifens**

(30) Priorität: 21.06.2001 DE 10129943
(71) Anmelder: Hofmann Maschinen- und Anlagenbau GmbH, 67550 Worms (DE)
(72) Erfinder: Wattendorf, Günther, 64625 Bensheim (DE)
(74) Vertreter: Nöth, Heinz

(57) **Zusammenfassung**

Eine Vorrichtung zum Füllen eines auf einer Felge aufgezogenen schlauchlosen Reifens 1 mit einer Füllglocke 10, welche mittels einer Hubeinrichtung 8 auf den Reifen 1 zu- und wegbewegbar ist und welche einen Außenring 2 aufweist, der druckdicht auf die Seitenwand 11 des Reifens 1 aufsetzbar ist, wobei zum Abdrücken des Reifenwulstes 3 von der Felge 9 innerhalb der Füllglocke 10 wenigstens ein Abdrückschuh 5 angeordnet ist und wobei für den wenigstens einen Abdrückschuh 5 eine Bewegungssteuereinrichtung 6, 7 vorgesehen ist, welche zumindest beim Abdrückvorgang eine vom Bewegungszustand der Füllglocke 10 unabhängige Bewegung des Abdrückschuhs 5 erzeugt.

## Beschreibung

Die Erfindung betrifft eine Vorrichtung zum Füllen eines auf einer Felge aufgezogenen schlauchlosen Reifens, nach dem Oberbegriff des Patentanspruches 1.

### [Stand der Technik]

Eine derartige aus der DE 35 46 183 C2 bekannte Vorrichtung besitzt eine Füllglocke, welche mittels einer Hubeinrichtung auf den Reifen zu und vom Reifen weg bewegbar ist. Die Füllglocke kann mit einem Außenring druckdicht auf die Seitenwand des Reifens aufgesetzt werden. Zum Einbringen der Füllluft wird die oben liegende Seitenwand des Reifens durch den von der Hubeinrichtung nach unten bewegten Außenring soweit nach unten gedrückt, bis ein Ringspalt zwischen dem oben liegenden Felgenhorn und dem Reifenwulst entsteht. Durch den Ringspalt wird dann die Füllluft in das Reifeninnere gebracht. Die Steuerung der Breite des Ringspaltes zwischen dem oben liegenden Felgenhorn und oberen Wulst des Reifens erfolgt über die Bewegung, mit welcher die oben liegende Seitenwand des Reifens mittels des Außenrings der Füllglocke nach unten gedrückt wird. Bei den herkömmlichen Kraftfahrzeugreifen wird durch das Abdrücken der Reifenseitenwand mit Hilfe des Außenrings der Füllglocke eine hinreichende Bewegung des oben liegenden Reifenwulstes zur Bildung eines ausreichenden Ringspaltes zwischen Felgenhorn und Reifenwulst erreicht. Bei solchen Reifen, bei denen das Abdrücken der Reifenseitenwand nicht ausreicht, um einen Ringspalt für die einströmende Füllluft zu bilden, ist eine Befüllung mit den herkömmlichen Vorrichtungen nicht möglich.

### [Aufgabe der Erfindung]

Aufgabe der Erfindung ist es daher, eine Vorrichtung der eingangs genannten Art zu schaffen, mit welcher auch solche Reifen befüllt werden können, bei denen beim Niederdrücken der Reifenseitenwand kein Ringspalt zwischen dem Felgenhorn und der Reifenwulst entsteht.

Diese Aufgabe wird erfindungsgemäß durch die kennzeichnenden Merkmale des Patentanspruches 1 gelöst.

Bei der Erfindung ist zum Abdrücken des Reifenwulstes von der Felge, insbesondere vom Felgenhorn innerhalb der Füllglocke zumindest ein Abdrückschuh angeordnet, für den eine Bewegungssteuereinrichtung vorgesehen ist, welche zumindest beim Abdrückvorgang eine vom Bewegungszustand der Füllglocke unabhängige Bewegung des wenigstens einen Abdrückschuhs erzeugt.

Die Bewegung des jeweiligen Abdrückschuhs ist bezüglich der Radachse des aus Scheibenrad/Felge und Reifen gebildeten Fahrzeugrades sowohl in radialer als auch in axialer Richtung gesteuert. Hierzu kann die Bewegungssteuereinrichtung vorgegebene Bewegungsbahnen aufweisen, welche innerhalb der Füllglocke angeordnet sind und entlang denen der jeweilige Abdrückschuh bewegt wird.

Bei der Erfindung kann ein Abdrückschuh vorgesehen sein, um den für die einzubringende Füllluft erforderlichen Spalt zumindest an einem Umfangsteil zwischen Felgenhorn und Reifenwulst herzustellen. In bevorzugter Weise sind jedoch mehrere Abdrückschuhe um den Felgenumfang vorzugsweise mit gleichen Winkelabständen angeordnet. Hierdurch lässt sich ein umlaufender Ringspalt zwischen dem Felgenhorn und dem Reifenwulst herstellten.

Die vorgegebenen Bewegungsbahnen für die jeweiligen Abdrückschuhe sind ortsfest zur Füllglocke angeordnet. Sie können an Kulissen vorgesehen sein, wobei die Bewegungsbahnen als Gleitbahnen, in denen an den Abdrückschuhen befestigte Gleitsteine geführt werden, ausgebildet sein können.

Die Bewegungssteuereinrichtung für die Abdrückschuhe kann ferner eine zweite Hubeinrichtung aufweisen, welche in axialer Richtung der Radachse gegenüber der Füllglocke bewegbar ist. Vorzugsweise sind die Abdrückschuhe bezüglich der zweiten Hubeinrichtung oder an der zweiten Hubeinrichtung in radialer Richtung verschiebbar gelagert. Hierzu kann die Hubeinrichtung einen Lagerring aufweisen, an welchem die Abdrückschuhe zumindest in axialer Richtung verschiebbar gelagert sind. Am Lagerring kann auch eine umlaufende Dichtung vorgesehen sein, mit welcher der Lagerring beim Absenken, und beim Abdrücken des Reifenwulstes vom Felgenhorn druckdicht auf das oben liegende Felgenhorn aufgesetzt wird. Gegebenenfalls kann auch eine Auflagefläche mit umlaufender Dichtung für das unten liegende Felgenhorn vorgesehen sein.

### [Beispiele]

Anhand der Figuren wird an einem Ausführungsbeispiel die Erfindung noch näher erläutert. Es zeigt:
- Figur 1: in schnittbildlicher Darstellung die rechte Hälfte einer Reifenfüllanlage mit auf der Reifenseitenwand aufgesetzter Füllglocke, wobei der oben liegende Reifenwulst noch am oben liegenden Felgenhorn anliegt; und
- Figur 2: die in Figur 1 dargestellte Vorrichtung mit vom Felgenhorn abgedrücktem Reifenwulst.

Beim dargestellten Ausführungsbeispiel ist eine Hubeinrichtung 8 vorgesehen, von welcher nur das untere Stück eines Hubkolbens, der in axialer Richtung (in den Figuren von oben nach unten und umgekehrt) wie bei der bekannten Vorrichtung in der DE 35 46 183 C2 bewegbar ist, dargestellt ist. Mit der Hubeinrichtung 8 wird eine Füllglocke 10 und eine weitere Hubeinrichtung 6 für Abdrückschuhe 5 in axialer Richtung bewegt.

Die mit der Hubeinrichtung 8 bewegte Füllglocke 10 dient zum Füllen eines Luftreifens, welcher ein auf einer Felge 9 eines Fahrzeugrades aufgezogener schlauchloser Reifen 1 ist. Zum Füllen des Reifens 1 wird das Fahrzeugrad mit seiner Radachse 12 koaxial zur Füllglocke 10 in einer nicht näher dargestellten Radaufnahmeeinrichtung der Reifenfüllanlage eingebracht. Hierbei kann ein unteres Felgenhorn 17 auf einer Auflage mit einer umlaufenden Dichtung 18 dicht aufliegen.

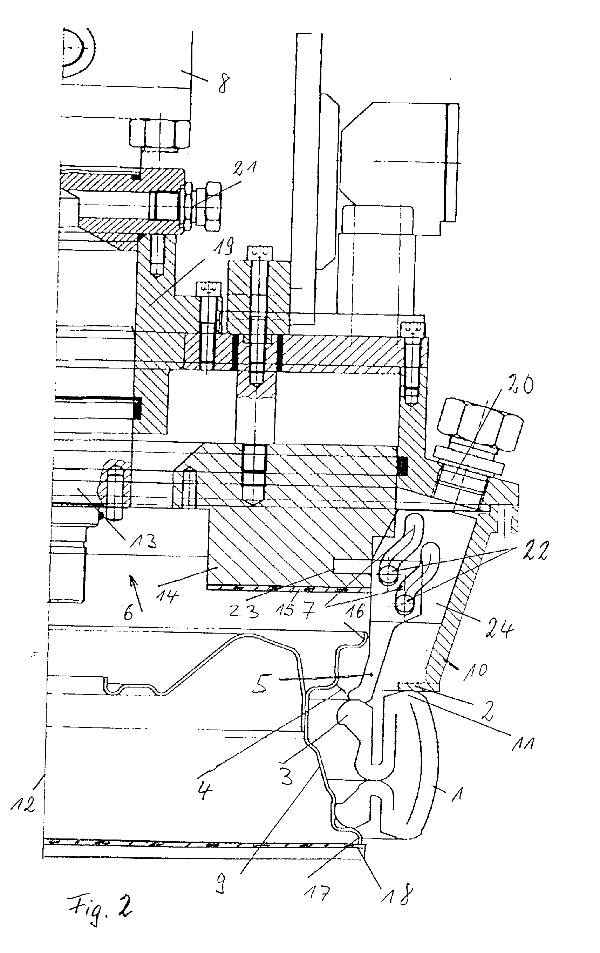

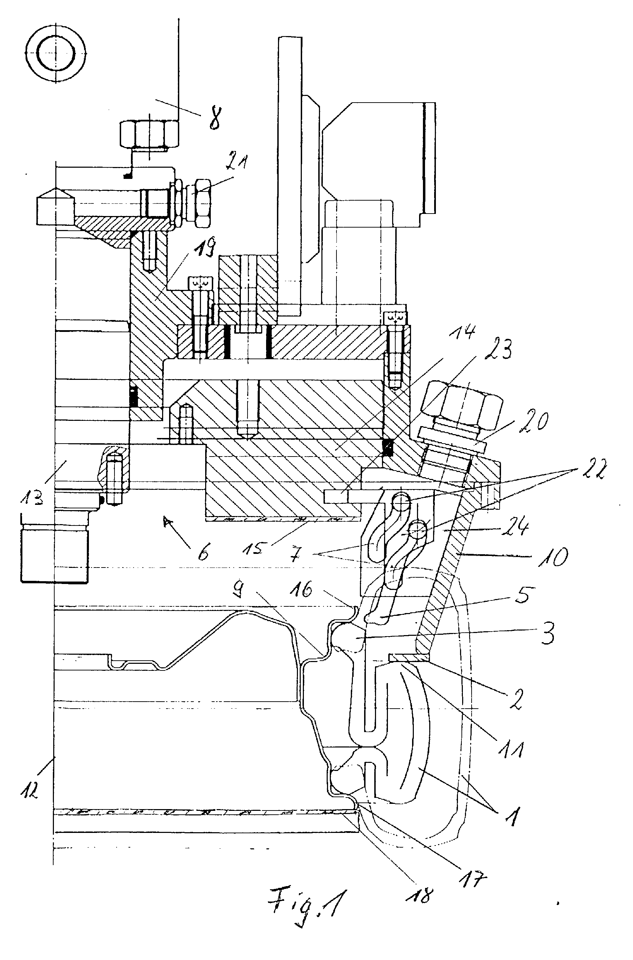

Zum Füllen des Reifens 1 wird ein Außenring 2 an der Unterseite der Füllglocke 10 auf eine oben liegende Seitenwand 11 des Reifens 1 aufgesetzt und von der Hubeinrichtung 8 nach unten gedrückt, wie es in der Figur 1 dargestellt ist. Hierbei wird der zwischen der Seitenwand 11 des Reifens und einem oben liegenden Reifenwulst 3 befindliche Reifenteil gefaltet, ohne dass der Reifenwulst 3 vom Felgenhorn 16 abgehoben wird. Der Reifen 1 wird dabei von der mit strichpunktierten Linien dargestellten Form in die in Figur 1 dargestellte Form mit durchgezogenen Linien gebracht.

Zum Abdrücken des oben liegenden Reifenwulstes 3 von der Felge 9 bzw. vom oben liegenden Felgenhorn 16 ist wenigstens ein Abdrückschuh 5 vorgesehen, welcher mit Hilfe einer noch zu erläuternden Bewegungssteuereinrichtung innerhalb der Füllglocke 10 bewegbar angeordnet ist.

Für die Bewegungssteuerung des Abdrückschuhs 5 sind in einer an der Innenseite der Füllglocke 10 befestigten Kulisse 24 in Form von Gleitbahnen vorgegebene Führungsbahnen 7 vorgesehen. Innerhalb der Führungsbahnen 7 sind Gleitsteine 22, welche fest mit dem Abdrückschuh 5 verbunden sind, in axialer Richtung, d. h. parallel zur Radachse 12 und in radialer Richtung geführt. Beim dargestellten Ausführungsbeispiel sind für jeden Gleitschuh zwei vorgegebene Führungsbahnen mit zugeordneten Gleitsteinen 22 vorgesehen.

Ferner ist der Abdrückschuh 5 in einem Lagerring 14 in radialer Richtung in einer Radialführung 23 verschiebbar gelagert.

Der Lagerring 14 ist fest mit einem Kolben 13 einer zweiten Hubeinrichtung 6 verbunden. Der Kolben 13 ist in einem Zylinder 19, welcher fest mit der Füllglocke 10 verbunden ist, in axialer Richtung verschiebbar geführt.

Um den Lagerring 14 und den daran gelagerten Abdrückschuh 5, aus der in der Figur 1 dargestellten Position in die untere Position zu bringen, wird über ein Hydraulikventil 21 ein Hydraulikdruckmedium in den Zylinder 19 eingebracht, so dass der Kolben 13 nach unten bewegt wird. Dabei wird der Abdrückschuh 5 entlang der vorgegebenen Führungsbahnen 7 geführt und der Reifenwulst 3 zur Bildung eines Spaltes 4 zwischen dem Felgenhorn 16 und dem abgedrückten Reifenwulst 3 nach unten verschoben.

Beim dargestellten Ausführungsbeispiel ist ein einzelner Abdrückschuh 5 dargestellt. Vorzugsweise sind am Lagerring 16 mehrere Abdrückschuhe 5 in Umfangsrichtung der Felge 9 in gleichen Winkelabständen vorgesehen. Jedem Abdrückschuh ist eine Kulisse 24 mit entsprechenden vorgegebenen Bewegungsbahnen 7 zugeordnet. Hierdurch lässt sich ein umlaufender Ringspalt 4 zwischen dem oben liegenden Felgenhorn 16 und dem abgedrückten Reifenwulst 3 erreichen. Durch diesen Ringspalt 4 kann dann Füllluft über ein Druckluftventil 20 in das Reifeninnere eingebracht werden. Der gefüllte Reifen nimmt dann die in Figur 1 in strichpunktierten Linien dargestellte Form an. Wie bei der aus der DE 35 46 183 C2 bekannten Reifenfüllvorrichtung wird mittels der Hubeinrichtung 8 die Füllglocke 10 vom Reifen abgehoben. Dabei wird auch die Hubeinrichtung 6 mit dem Lagerring 14 und den daran gelagerten Abdrückschuhen 5 vom Reifen 1 abgehoben.

Bei dem in der Figur 2 dargestellten Füllvorgang befindet sich eine an der Unterseite des Lagerrings 14 vorgesehene umlaufende Dichtung 15 im Abstand zum oben liegenden Felgenhorn 16. Da der Außenring 2 der Füllglocke 10 druckdicht auf der Seitenwand 11 des Reifens 1 aufsitzt, ist es nicht erforderlich, dass die umlaufende Dichtung 15 auf dem oberen Felgenhorn 16 aufliegt. Da der Innenraum der Füllglocke nach außen hin abgedichtet ist und somit der Füllvorgang unbeeinträchtigt erfolgen kann. Es ist jedoch auch möglich den Lagerring 14 soweit abzusenken, dass die Dichtung 15 auf dem oben liegenden Felgenhorn 16 druckdicht aufsitzt, wobei die Bewegungsbahnen 7 für die Abdrückschuhe 5 entsprechend gestaltet sind.

### [Bezugszeichenliste]

- 1: Reifen
- 2: Außenring
- 3: Reifenwulst
- 4: Ringspalt
- 5: Abdrückschuh
- 6: Hubeinrichtung für den Abdrückschuh
- 7: vorgegebene Bewegungsbahn
- 8: Hubeinrichtung für die Füllglockenanordnung
- 9: Felge
- 10: Füllglocke
- 11: Seitenwand des Reifens
- 12: Radachse
- 13: Kolben
- 14: Lagerring
- 15: Dichtung am Lagering
- 16: oben liegendes Felgenhorn
- 17: unten liegendes Felgenhorn
- 18: Dichtung am unten liegenden Felgenhorn
- 19: Zylinder
- 20: Druckluftventil
- 21: Hydraulikventil
- 22: Gleitstein
- 23: Radialführung für den Abdrückschuh
- 24: Kulisse

## Patentansprüche

1. Vorrichtung zum Füllen eines auf einer Felge (9) aufgezogenen schlauchlosen Reifens (1) mit einer Füllglocke (10), welche mittels einer Hubeinrichtung (8) auf den Reifen (1) zu- und wegbewegbar ist und welche einen Außenring (2) aufweist, der druckdicht auf die Seitenwand (11) des Reifens (1) aufsetzbar ist, **dadurch gekennzeichnet, dass** zum Abdrücken des Reifenwulstes (3) von der Felge (9) innerhalb der Füllglocke (10) wenigstens ein Abdrückschuh 5 abgeordnet ist und dass für den Abdrückschuh (5) eine Bewegungssteuereinrichtung (6, 7) vorgesehen ist, welche zumindest beim Abdrückvorgang eine vom Bewegungszustand der Füllglocke (10) unabhängige Bewegung des Abdrückschuhs erzeugt.

2. Vorrichtung nach Anspruch 1, **dadurch gekennzeichnet, dass** die Bewegung des wengistens einen Abdrückschuhs (5) in bezüglich der Radachse (12) radialer und axialer Richtung gesteuert ist.

3. Vorrichtung nach Anspruch 1 oder 2, **dadurch gekennzeichnet, dass** die Bewegungssteuereinrichtung (6, 7) vorgegebene Bewegungsbahnen (7), welche innerhalb der Füllglocke (10) angeordnet sind, aufweist.

4. Vorrichtung nach Anspruch 3, **dadurch gekennzeichnet, dass** die vorgegebenen Bewegungsbahnen (7) ortsfest zur Füllglocke (10) angeordnet sind.

5. Vorrichtung nach einem der Ansprüche 1 bis 4, **dadurch gekennzeichnet, dass** die Bewegungssteuereinrichtung (6, 7) ferner eine in axialer Richtung gegenüber der Füllglocke (10) bewegliche Hubeinrichtung (6) aufweist, mit der die Abdrückschuhe (5) entlang der vorgegebenen Bewegungsbahnen (7) bewegbar sind.

6. Vorrichtung nach Anspruch 5, **dadurch gekennzeichnet, dass** der wenigstens eine Abdrückschuh (5) an der zweiten Hubeinrichtung (6) zumindest in radialer Richtung verschiebbar gelagert ist.

7. Vorrichtung nach einem der Ansprüche 3 bis 5, **dadurch gekennzeichnet, dass** die vorgegebenen Bewegungsbahnen (7) als Gleitbahnen ausgebildet sind.

8. Vorrichtung nach Anspruch 5 oder 6, **dadurch gekennzeichnet, dass** die zweite Hubeinrichtung (6) einen Lagerring (14) aufweist, an welchem die Abdrückschuhe (5) zumindest in axialer Richtung verschiebbar gelagert sind.

9. Vorrichtung nach Anspruch 8, **dadurch gekennzeichnet dass** am Lagerring (14) eine umlaufende Dichtung (15) vorgesehen ist, welche auf ein oben liegendes Felgenhorn (16) der Felge (9) druckdicht aufsetzbar ist.

10. Vorrichtung nach einem der Ansprüche 1 bis 9, **dadurch gekennzeichnet, dass** das unten liegende Felgenhorn (17) der Felge (9) auf eine umlaufende Dichtung (18) auflegbar ist.
